# EUROPEAN PATENT SPECIFICATION

(11) **EP 1 310 157 B1**
(45) Date of publication and mention of the grant of the patent: **12.09.2007**
(21) Application number: 02079508.4
(22) Date of filing: 30.10.2002
(51) Int. Cl.: A01G 9/12, A01G 9/14

(54) **Device and greenhouse for growing plants**
Vorrichtung und Gewächshaus zur Pflanzenzucht
Dispositif et serre pour cultiver des plantes

(30) Priority: 07.11.2001 NL 1019323
(43) Date of publication of application: 14.05.2003
(73) Proprietor: ALCOMIJ B.V., NL-2691 AS 's Gravenzande (NL)
(72) Inventor: Meenhorst, Johannes, 4906 HD Oosterhout (NB) (NL); Ebbelink, Paul Ido, 2651 PP Berkel en Rodenrijs (NL)
(74) Representative: Van Breda, Jacobus

(56) References cited:
- DE-U- 8 609 183
- FR-A- 2 557 760
- FR-A- 2 780 607

## Description

The invention relates to a device for growing plants, in particular for food products such as tomatoes and peppers and the like, part of which device is formed by support wires along which the plants are trained. The invention also relates to a greenhouse for the cultivation of plants, in which such devices are placed that are embodied with support wires along which the plants are trained.

Such a device and greenhouse for the cultivation of plants for food products such as tomatoes and peppers is known from practice. The known device and greenhouse have, for example, concrete floors, while the plants are cultivated on, for example, glass wool, and the supply of the correct amount of predetermined nutrients to the plants is automated. The plants to be cultivated are trained upward along so-called support wires that are provided in the greenhouse. The devices used for this purpose are embodied as frameworks arranged at a distance from one another so that there are enough paths for walking and driving through to facilitate tending the plants, and eventually harvesting them.

This form of market gardening is characterized by a constant endeavour to realise a higher yield per square meter of greenhouse surface, in order to cope with the rising cost of labour, which includes the cost for measures taken to improve working conditions. The ever stricter environmental norms and the necessity of managing the available energy with care, form a further motive for reducing the cultivating costs per square meter of greenhouse surface.

From DE-U-86 09 183 a device for growing plants is known comprising a movable frame on which vertical stands are places connected by horizontal tubes. The tubes serve the purpose of training the plants and are proposed to circumvent the use of the earlier known bars that are forced into the earth, thereby damaging the plants' roots.

FR-A-2 557 760 teaches the use of a modular device for growing plants having vertical stands for training the plants. The device according to FR-A-2 557 760 is immobile and placed on solid ground.

FR-A-2 780 607 concerns a greenhouse for the cultivation of plants in which movable devices are placed for training of the plants. The devices of FR-A-2 780 607 do not provide for support wires and said devices are movable over fixed rails so as to cause that the distance between the devices is maintained a fixed value.

It is the object of the invention to make a significant contribution to the above-mentioned constant endeavour to reduce the cultivating costs per square meter greenhouse surface and to increase the yield per square meter.

To this end it is proposed in accordance with the invention, that the device comprise at least one movable frame on which the support wires are mounted. The advantage to be gained by this is that with the customary use of a plurality of such devices, they can be placed closely together without aisles between said devices. This may yield a saving of space amounting to approximately 30%, allowing the effective production area in the greenhouse to increase by a corresponding percentage. As this does not alter the amount of energy necessary for maintaining the temperature in the greenhouse, this saving of space also corresponds to an equivalent reduction in energy costs per square meter of production area.

Further advantages may be achieved by equipping the greenhouse such that there is a workplace for receiving one movable device a time for tending and/or harvesting the crop of that device. As in this manner the crop can be tended as well as harvested, much fewer personnel is needed in the greenhouse than in the greenhouse according to the prior art, and a higher product quality can be realised, as well as a better work performance.

Further desirable aspects of the embodiment of the device to be used in such a greenhouse will be discussed below.

It is desirable for the device to be equipped with a frame that is provided with floor-oriented rolling members such as wheels, and for the upper side of the frame to be provided with uprights, which are interconnected at their ends farthest removed from the frame by means of stay wires. This offers a relatively light construction that is nonetheless sufficiently strong to bear the plant suspended from the stay wires by means of the support wires.

The required strength of the construction can be achieved especially conveniently without the use of heavy construction components, by embodying the device such that viewed from the frame and in the longitudinal direction of the frame, the uprights are placed on the frame at an angle so as to slant away from one another.

It is further desirable for the uprights, at their ends facing away from the frame, to be coupled to the frame by means of bracing wires.

Advantageously, the bracing wires comprise tensioning members.

Hereinafter the invention will be further elucidated with reference to the drawing.

In a single figure the drawing shows a device to be used in a greenhouse according to the invention in accordance with a preferred embodiment of the invention. The elucidation given below serves to remove any possible ambiguities that may be contained in the claims appended with said specification, without limiting the same to the discussed specific exemplary embodiment.

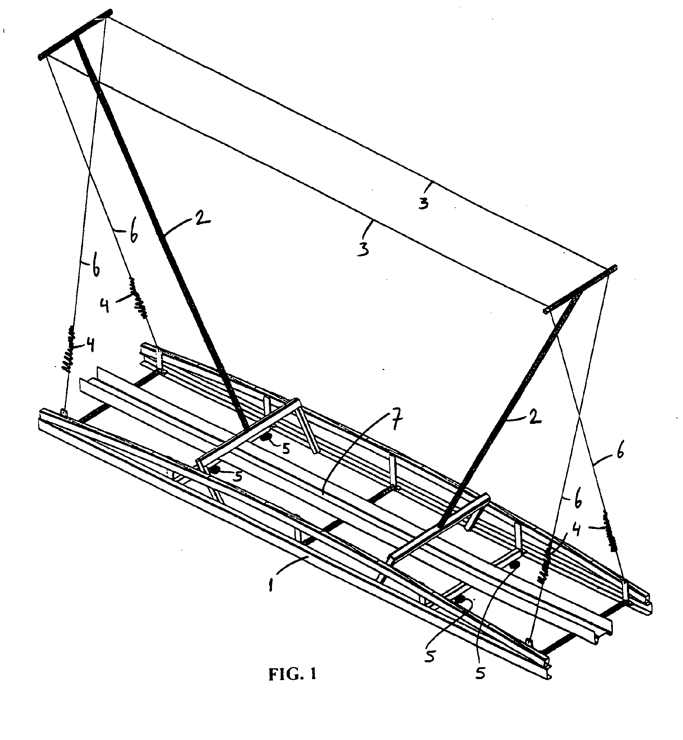

Fig. 1 shows that the device for the cultivation of plants, as in the framework of the invention designed in particular for food products such as tomatoes and peppers and the like, comprises a frame 1, on which support wires may be mounted as described below. On the floor-oriented side, the frame 1 is provided with rolling members in the form of wheels 5, and on the upper side, it is equipped with uprights 2, which are interconnected at their ends farthest removed from the frame 1 by means of stay wires 3.

The above-mentioned support wires may be provided on the frame 1 such that they extend between a channel 7 incorporated in said frame 1 and the stay wires 3 just-mentioned. In this channel 7 the plants are planted, and the support wires are preferably also fastened to this channel 7. The manner in which this is to be implemented is completely known to the person skilled in the art, so that no further explanation has been given.

The figure clearly shows that the uprights 2 have been placed on the frame 1 at an angle, so that viewed from the frame 1 and in the longitudinal direction of this frame, they slant away from each other. This measure makes a relatively light construction possible that has sufficient strength to bear the various support wires and the plants fastened thereto. It is desirable to use bracing wires 6 extending between the ends of the uprights 2 farthest removed from the frame 1 and said frame 1.

It is further preferred for the bracing wires to comprise separate tensioning members 4, in order to allow the construction, and more specifically the stay wires 3, to be sufficiently tensioned to compensate for the weight of the support wires and the plants suspended from said stay wires 3.

Further not shown, but to the person skilled in the art completely obvious, is that the greenhouse according to the invention may be provided with a plurality of devices as shown in Fig. 1, that may be placed closely together in the greenhouse without aisles between said devices. In this way the savings intended with this invention may be achieved. As mentioned earlier, this invention makes it possible to save up to approximately 30% of the floor surface with a correspondingly increased yield of crop products per square meter of greenhouse surface. Similarly, this saving corresponds with an equivalent savings in energy costs per square meter of production area. By in addition embodying the greenhouse with a central work place where one moveable device a time can be received for tending and/or harvesting the crop products, as shown in the figure, further savings with regard to the number of personnel required are possible, respectively, the production is increased. Advantages are also gained with respect to the quality of the product.

## Claims

1. A device for growing plants, in particular for food products such as tomatoes and peppers and the like, part of which device is formed by support wires along which the plants are trained, **characterised in that** the device comprises at least one movable frame (1) on which the support wires are mounted.

2. A device according to claim 1, **characterised in that** the frame is provided with floor-oriented rolling members such as wheels (5), and that the upper side of the frame is provided with uprights (2), which are interconnected at their ends farthest removed from the frame (1) by means of stay wires (3).

3. A device according to claim 2, **characterised in that** the uprights (2) are placed on the frame (1) at an angle such that, viewed from the frame (1) and in the longitudinal direction of the frame (1), they slant away from one another.

4. A device according to claim 2 or 3, **characterised in that** the uprights (2), at their ends facing away from the frame (1), are coupled to the frame (1) by means of bracing wires (6).

5. A device according to claim 4, **characterised in that** the bracing wires (6) comprise tensioning members (4).

6. A greenhouse for the cultivation of plants, in which movable devices are placed for the training of plants, **characterised in that** said devices are embodied with support wires along which the plants are trained and said devices are placed closely together without aisles between said devices.

7. A greenhouse according to claim 6, **characterised in that** there is a workplace for receiving one movable device a time for tending and/or for harvesting the crop thereof.

## Patentansprüche

1. Vorrichtung zum Anbau von Pflanzen, insbesondere für Nahrungsprodukte wie Tomaten und Paprika u. dgl., wobei ein Teil der Vorrichtung durch Stützdrähte gebildet ist, entlang derer die Pflanzen hochgezogen werden,
**dadurch gekennzeichnet, dass**
die Vorrichtung mindestens einen beweglichen Rahmen (1) umfasst, an dem die Stützdrähte angebracht sind.

2. Vorrichtung nach Anspruch 1, **dadurch gekennzeichnet, dass** der Rahmen mit bodenausgerichteten Rollteilen wie Rädern (5) versehen ist, und dass die Oberseite des Rahmens mit Pfosten (2) versehen ist, die an ihren am weitesten vom Rahmen (1) entfernten Enden mittels Haltedrähten (3) miteinander verbunden sind.

3. Vorrichtung nach Anspruch 2, **dadurch gekennzeichnet, dass** die Pfosten (2) am Rahmen (1) in solch einem Winkel angesetzt sind, dass sie sich vom Rahmen (1) aus und in der Längsrichtung des Rahmens (1) gesehen, voneinander weg neigen.

4. Vorrichtung nach Anspruch 2 oder 3, **dadurch gekennzeichnet, dass** die Pfosten (2) an ihren vom Rahmen (1) weg gewandten Enden mittels Spanndrähten (6) mit dem Rahmen (1) verbunden sind.

5. Vorrichtung nach Anspruch 4, **dadurch gekennzeichnet, dass** die Spanndrähte (6) Spannteile (4) umfassen.

6. Gewächshaus für die Kultivierung von Pflanzen, in dem bewegliche Vorrichtungen zum Hochziehen von Pflanzen angeordnet sind, **dadurch gekennzeichnet, dass** die Vorrichtungen mit Stützdrähten ausgeführt sind, entlang derer die Pflanzen hochgezogen werden, und die Vorrichtungen, ohne Gänge zwischen den Vorrichtungen, eng zusammen angeordnet sind.

7. Gewächshaus nach Anspruch 6, **dadurch gekennzeichnet, dass** ein Arbeitsplatz vorgesehen ist, um jeweils eine bewegliche Einrichtung aufzunehmen, um nach deren Früchten zu sehen und/oder diese zu ernten.

## Revendications

1. Dispositif pour cultiver des plantes, en particulier pour des produits alimentaires tels que des tomates, des poivrons et similaires, une partie dudit dispositif étant composée de fils support le long desquels les plantes sont tuteurées, **caractérisé en ce que** le dispositif comprend au moins un châssis amovible (1) sur lequel les fils support sont montés.

2. Dispositif selon la revendication 1, **caractérisé en ce que** le châssis est pourvu d'éléments roulants orientés vers le sol tels que des roues (5), et **en ce que** la partie supérieure du châssis est équipée de montants (2) interconnectés à leurs extrémités les plus éloignées, écartées du châssis (1) au moyen de fils d'ancrage (3).

3. Dispositif selon la revendication 2, **caractérisé en ce que** les montants (2) sont placés sur le châssis (1) à un angle tel que, vu du châssis (1) et dans la direction longitudinale du châssis (1), ils sont inclinés l'un par rapport à l'autre.

4. Dispositif selon la revendication 2 ou la revendication 3, **caractérisé en ce que** les montants (2), à leurs extrémités faisant face au châssis (1) sont couplés au châssis (1) au moyen de fils tendeurs (6).

5. Dispositif selon la revendication 4, **caractérisé en ce que** les fils tendeurs (6) comprennent des éléments de tension (4).

6. Serre pour la culture des plantes, dans laquelle des dispositifs amovibles sont placés pour le tuteurage des plantes, **caractérisé en ce que** lesdits dispositifs comportent des fils support le long desquels les plantes sont tuteurées et lesdits dispositifs sont placés de façon rapprochée sans passages entre lesdits dispositifs.

7. Serre selon la revendication 6, **caractérisée en ce qu'**elle comporte un lieu de travail destiné à recevoir un dispositif amovible à la fois, pour cultiver et/ou pour récolter les cultures qui s'y trouvent.
